# EUROPÄISCHE PATENTANMELDUNG

(11) **EP 2 624 412 A1**
(43) Veröffentlichungstag der Anmeldung: **07.08.2013**
(21) Anmeldenummer: 12153977.9
(22) Anmeldetag: 06.02.2012
(51) Int. Cl.: H02J 9/06

(54) **Stromversorgung**

(71) Anmelder: Siemens Aktiengesellschaft, 80333 München (DE)
(72) Erfinder: Augesky, Christian, 1100 Wien (AT); Schweigert, Harald, 1120 Wien (AT)

(57) **Zusammenfassung**

Die Erfindung betrifft eine Stromversorgung mit zumindest einem Ausgang zur Ausgabe einer Ausgangsgleichspannung und einer Schaltung zur unterbrechungsfreien Stromversorgung, wobei ein Zwischenkreis (10) zwischen einem eingangsseitigen DC-DC-Wandler (8) und zumindest einem ausgangsseitigen Ausgangsschaltregler (91, 92, 93, 9n) zur Regelung der zumindest einen Ausgangsgleichspannung angeordnet ist und wobei an dem Zwischenkreis (10) ein Energiespeichermodul (11, 11', 15, 15') angeschlossen ist. Es ist somit kein zusätzliches Gerät mit einer Ladeschaltung bzw. Ladeüberwachung und einer Umschaltung von Versorgungszweigen erforderlich.

## Beschreibung

Die Erfindung betrifft eine Stromversorgung mit zumindest einem Ausgang zur Ausgabe einer Ausgangsgleichspannung und einer Schaltung zur unterbrechungsfreien Stromversorgung.

Stromversorgungen dienen der Umwandlung einer Versorgungsnetzspannung in eine geregelte Ausgangsgleichspannung zur Versorgung zumindest einer angeschlossenen Last. Viele Einsatzbereiche erfordern dabei eine Überbrückung von Netzausfällen. Beispielsweise sollen Steuerungen von Industrieanlagen bei kurzeitigen Ausfällen eines Versorgungsnetzes weiter mit elektrischer Energie versorgt werden. Dazu ist es notwendig, Energie zwischenzuspeichern und im Bedarfsfall an die zu versorgende Last abzugeben.

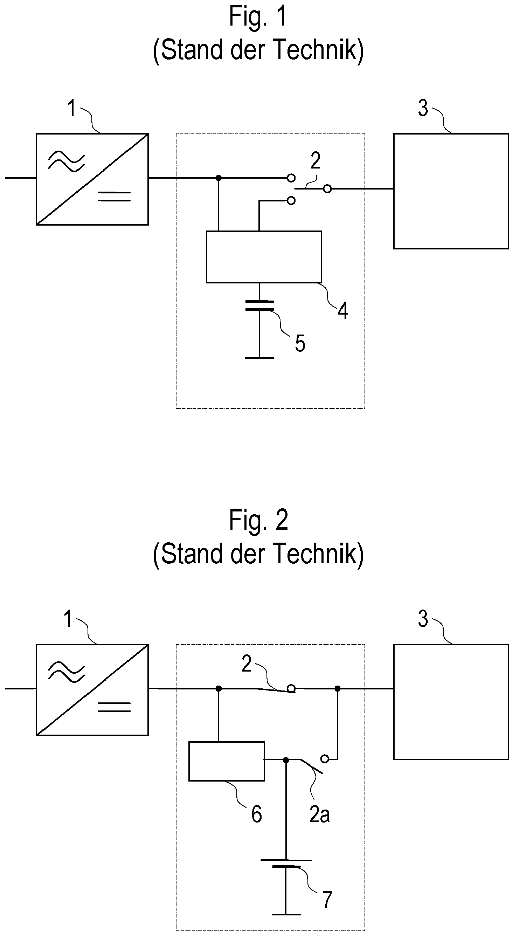

Nach dem Stand der Technik werden Schaltung zur unterbrechungsfreien Stromversorgung (USV) am Ausgang einer Stromversorgungen angeordnet. Beispielsweise wird eine Standardstromversorgung mit einer Ausgangsgleichspannung von z.B. 24V mit einer Gleichstrom-USV zusammengeschaltet. Als Energiespeicher der Gleichstrom-USV dienen entweder Kondensatoren (Fig. 1) oder Akkumulatoren (Fig. 2). Die Gleichstrom-USV bezieht die Energie zur Ladung des Energiespeichers aus der Standardstromversorgung.

Bei einer Kondensatorlösung wird infolge eines Netzausfalls ein Strompfad von der Standardstromversorgung zur Last auf einen Strompfad vom geladenen Kondensator zur Last umgeschaltet. Dabei sorgt ein Abwärts- oder Aufwärtsschaltregler für die Umwandlung der abnehmenden Kondensatorspannung auf die vorgegebene Ausgangsgleichspannung.

Der Einsatz eines Akkumulators erfordert keinen Abwärtsschaltregler, weil die weitgehend konstante Akkumulatorspannung an die Ausgangsgleichspannung anpassbar ist. Lediglich eine Ladeschaltung ist zur Aufladung des Akkumulators mittels Standardstromversorgung erforderlich. Bei Netzausfall wird die Last über einen weiteren Schalter mittels Akkumulator versorgt.

Nachteilig ist bei beiden Lösungen der Realisierungsaufwand, weil zwei gesteuerte Einheiten zum Einsatz kommen, nämlich eine Standardstromversorgung einerseits und eine Gleichstrom-USV andererseits.

Der Erfindung liegt die Aufgabe zugrunde, für eine Stromversorgung der eingangs genannten Art eine Verbesserung gegenüber dem Stand der Technik anzugeben.

Erfindungsgemäß wird diese Aufgabe gelöst durch eine Anordnung gemäß Anspruch 1. Weiterbildungen sind in abhängigen Ansprüchen angegeben.

Dabei ist ein Zwischenkreis zwischen einem eingangsseitigen DC-DC-Wandler und zumindest einem ausgangsseitigen Ausgangsschaltregler zur Regelung der zumindest einen Ausgangsgleichspannung angeordnet. An diesen Zwischenkreis mit variabler Spannung ist ein Energiespeichermodul direkt angeschlossen.

Es ist somit kein zusätzliches Gerät mit einer Ladeschaltung bzw. Ladeüberwachung und einer Umschaltung der Versorgungszweige erforderlich. Die Zweistufigkeit eines DC-DC-Wandlers und eines nachgeschalteten Ausgangsschaltreglers ermöglicht die direkte Anschaltung eines Energiespeichers an den Zwischenkreis. Dieser ist günstigerweise als Kleinspannungszwischenkreis mit einer Spannung bis z.B. 45V ausgebildet, wodurch die Handhabung durch einen Benutzer einfacher und sicherer wird. Zudem sind beim Einsatz eines Akkumulators geringere Zellenzahlen ausreichend.

Als DC-DC-Wandler ist beispielsweise ein Resonanzwandler mit einem fixen Übersetzungsverhältnis vorgesehen.

Weil die erfindungsgemäße Stromversorgung bereits einen Ausgangsschaltregler umfasst, erfolgt eine Erhöhung der Netzausfallsüberbrückungszeit in einfacher Weise durch Zuschaltung weiterer Energiespeichermodule, ohne zusätzliche Veränderung des Schaltungsaufbaus. An den Zwischenkreis sind zudem mehrere Ausgangsschaltregler anschaltbar, sodass die Stromversorgung über mehrere, gegebenenfalls auch unterschiedliche Ausgangsgleichspannungen verfügt.

In einer vorteilhaften Ausbildung ist der Ausgangsschaltregler bzw. sind die Ausgangsschaltregler als Abwärtsschaltregler ausgebildet. Auf diese Weise lässt sich eine Zwischenkreisspannung als Kleinspannung einstellen, die ein gefahrloses Zu- und Wegschalten von Komponenten erlaubt. Von einem solchen Kleinspannungszwischenkreis wird mittels eines Abwärtsschaltreglers eine übliche Ausgangsspannung im Bereich von 24 Volt erreicht. Der geringe Niveauunterschied zwischen Ein- und Ausgangsspannung des Abwärtsschaltreglers ermöglicht dabei einen hohen Wirkungsgrad.

Dabei ist es von Vorteil, wenn das Energiespeichermodul in einem separaten Gehäuse angeordnet ist und mittels Steckkontakte mit dem Zwischenkreis verbindbar ist. Zur Verbindung mehrerer Energiespeichermodule weist der Zwischenkreis mehrere Kontakte auf. Alternativ dazu ist eine einfache Änderung der Netzausfallsüberbrückungszeit durch den Austausch von Energiespeichermodulen unterschiedlicher Kapazität durchführbar.

Ein weiterer Vorteil der erfindungsgemäßen Anordnung liegt darin, dass das Energiespeichermodul zusätzlich zur Abdeckung von Leistungsspitzen bei besonders unstetigen Lasten nutzbar ist, zum Beispiel beim Anlaufen eines Gleichstrommotors. Das Energiespeichermodul muss nicht extra zugeschaltet werden, weil es permanent an dem Zwischenkreis angeschaltet ist.

In einer Weiterbildung der Erfindung ist der DC-DC-Wandler über eine sogenannte aktive Power-Factor-Corretion-Schaltung (PFC-Schaltung) an eine eingangsseitige Versorgungsspannung angeschlossen. Eine solche Anordnung ist bei einphasigen Versorgungsnetzen vorzusehen und reduziert die Belastung des Netzes mit Oberwellen. Zudem ist damit ein breiterer Eingangsspannungsbereich möglich.

Im einfachsten Fall umfasst das Energiespeichermodul einen Kondensator, zum Beispiel einen Aluminium-Elektrolytkondensator oder einen sogenannten Ultra-Cap. Der Kondensator ist dabei direkt an den Zwischenkreis angeschlossen.

Um während eines Einschaltvorgangs der Stromversorgung einen Ladestrom des Kondensators zu begrenzen ist es sinnvoll, den Kondensator über einen Ladewiderstand an den Zwischenkreis anzuschließen. Die Aufladezeit des Kondensators limitiert dann nicht die Hochlaufzeit der Stromversorgung. Die Ausgangsgleichspannung steht schon vor dem vollständigen Laden des Kondensators zur Verfügung.

Zu diesem Ladewiderstand ist in einer günstigen Weiterbildung ein Schaltelement parallel geschaltet. Damit ist der Ladewiderstand überbrückbar, sobald der Kondensator aufgeladen ist. Zu diesem Zweck ist das Schaltelement mit einer Steuerung der Stromversorgung verbunden.

In einer weiteren Ausprägung der Erfindung umfasst das Energiespeichermodul einen Akkumulator, wodurch längere Netzausfallsüberbrückungszeiten realisierbar sind. Falls die Zwischenkreisspannung am Ausgang des DC-DC-Wandlers höher ist als die Ladeschlussspannung des Akkumulators, ist nur ein einfacher Schalter wie z.B. eine Diode zur Rückspeisung in den Zwischenkreis erforderlich. Jede sonstige Zusatzelektronik kann entfallen.

In anderen Fällen ist es sinnvoll, wenn der Akkumulator über eine Ladeschaltung an den Zwischenkreis angeschaltet ist. Eine solche Ladeschaltung besteht im einfachsten Fall aus einem Widerstand mit einem Serienschalter im Akkumulatormodul und einer Entkoppelungsdiode.

Eine andere Variante sieht vor, dass die Stromversorgung zumindest zwei ausgangsseitige Ausgangsschaltregler umfasst und dass der Akkumulator über einen Ausgangsschaltregler, welcher als Ladeschaltung ausgeprägt ist, an den Zwischenkreis angeschaltet ist. Der Ausgangsschaltregler verfügt dabei ohnehin über eine einstellbare Spannung und eine Strombegrenzung.

Im Falle eines Netzausfalls speist der Akkumulator über den Schaltregler in den Zwischenkreis zurück. Der Schaltregler arbeitet dann in umgekehrter Richtung als Aufwärtsschaltregler und hebt das Akkuspannungsniveau auf ein höheres Zwischenkreisspannungsniveau. Die Regelbarkeit der Ausgangsgleichspannung bzw. Ausgangsgleichspannungen bleibt im vollen Umfang erhalten. Damit ist auch die Zellenzahl des Akkumulators unabhängig von den Ausgangsgleichspannungen einzelner Lastausgänge.

Alternativ dazu ist der Akkumulator zusätzlich über ein Entkoppelungselement an den Zwischenkreis angeschaltet. In diesem Fall muss der Ausgangsschaltregler nicht auf das Rückspeisen des Akkumulatorstromes ausgelegt sein. Der Ausgangsschaltregler muss lediglich den wesentlich geringeren Ladestrom des Akkumulators beherrschen.

Von Vorteil ist es zudem, wenn die Ladeschaltung bzw. das Energiespeichermodul über eine zusätzliche Verbindung mit einer Steuerung der Stromversorgung verbunden ist, um den Ladezustand des Akkumulators festzustellen.

Generell ist es günstig, wenn die Ausgangsschaltregler eine untere Betriebsspannungsgrenze aufweisen, die unterhalb einer Entladespannung des Energiespeichermoduls liegt. Eine Entladeschlussspannung von Akkumulatoren liegt oftmals deutlich unterhalb einer Leerlaufspannung. Auch diese niedrige Entladeschlussspannung ist dann für die Ausgangsschaltregler als eingangsseitige Betriebsspannung nutzbar.

Eine weitere Ausprägung der Erfindung sieht vor, dass parallel zum Zwischenkreis ein weiterer Zwischenkreis vorgesehen ist, welcher über einen weiteren DC-DC-Wandler gespeist ist. An diesem weiteren Zwischenkreis sind dann wiederum Ausgangsschaltregler angeschlossen.

Dabei ist es günstig, wenn an jeden Zwischenkreis ein eigenes Energiespeichermodul angeschlossen ist. Damit ist ein einfacher Aufbau mit einer Aufteilung der Gesamtleistung auf zwei Zwischenkreise angegeben.

Alternativ dazu ist vorgesehen, dass an beide Zwischenkreise über eine jeweilige Schalteinheit ein gemeinsames Energiespeichermodul angeschlossen ist. Günstigerweise umfasst die jeweilige Schalteinheit eine Diode als Entkoppelungselement.

Vorteilhafterweise ist in Serie zu mindestens einer Schalteinheit eine Sicherung vorgesehen. Diese Sicherung ist so ausgelegt, dass bei Auslösung der andere Zwischenkreis noch versorgt werden kann. Auf diese Weise ist der abgesicherte Zwischenkreis im Störungsfall von dem Energiespeichermodul trennbar, ohne den Betrieb des weiteren Zwischenkreises zu beeinträchtigen. Mittels Energiespeichermodul ist auch weiterhin eine Pufferung des weiteren Zwischenkreises möglich.

In einem erfindungsgemäßen Verfahren zum Betreiben einer oben beschriebenen Stromversorgung ist vorgesehen, dass im normalen Betrieb das Energiespeichermodul mit Energie aus dem Zwischenkreis geladen wird und im Bedarfsfall Energie in den Zwischenkreis entlädt. Gegebenenfalls ist vor einem Anschließen eines Energiespeichermoduls an einen Zwischenkreis oder während eines Hochfahrvorgangs der Stromversorgung eine anderweitige Aufladung des Energiespeichermoduls vorgesehen.

Die Erfindung wird nachfolgend in beispielhafter Weise unter Bezugnahme auf die beigefügten Figuren erläutert. Es zeigen in schematischer Darstellung:
- Fig. 1: USV mit Kondensator nach dem Stand der Technik
- Fig. 2: USV mit Akkumulator nach dem Stand der Technik
- Fig. 3: Schaltungsanordnung mit Kondensator
- Fig. 4: Schaltungsanordnung mit Kondensator und Ladeschaltung
- Fig. 5: Schaltungsanordnung mit Akkumulator und Ladeschaltung
- Fig. 6: Schaltungsanordnung mit Akkumulator und einem Schaltregler, welcher als Ladeschaltung genutzt wird
- Fig. 7: Schaltregler gemäß Fig. 6 mit bidirektionaler Arbeitsweise
- Fig. 8: Stromversorgung mit zwei Pfaden und zwei Energiespeichermodulen
- Fig. 9: Stromversorgung mit zwei Pfaden und einem Energiespeichermodul

Eine erste bekannte Lösung sieht eine USV mittels eines Kondensators 5 vor (Fig. 1). Im Normalbetrieb ist eine Last 3 über einen Schalter 2 an eine Stromversorgung 1 angeschaltet. Die Stromversorgung 1 ist an ein einphasiges oder dreiphasiges Versorgungsnetz angeschlossen und liefert an ihrem Ausgang eine Ausgangsgleichspannung. An dieser Ausgangsgleichspannung ist über einen bidirektionalen Buck/Boost-Wandler 4 der Kondensator 5 angeschlossen. Der Buck/Boost-Wandler 4 weist dabei einen Ausgang auf, der über den Schalter 2 mit der Last 3 verbindbar ist.

Wenn das Versorgungsnetz ausfällt, schaltet der Schalter 2 den Strompfad von der Stromversorgung 1 auf den Ausgang des Buck/Boost-Wandlers 4 um. Die im Kondensator 5 gespeicherte Energie wird mittels Buck/Boost-Wandler 4 an die Last 3 abgegeben, bis entweder das Versorgungsnetz wieder Energie liefert oder die Spannung im Kondensator 5 unter die Minimaleingangsspannung des Buck/Boost-Wandlers 4 abfällt. Im letzteren Fall reicht die Überbrückungskapazität des Kondensators 5 nicht aus.

Um die Netzausfallsüberbrückungszeit zu verlängern werden nach dem Stand der Technik Akkumulatoren eingesetzt. Eine entsprechende bekannte Schaltung ist in Fig. 2 gezeigt. Wieder ist eine Last 3 über einen Schalter 2 an eine Stromversorgung 1 angeschlossen. An die Stromversorgung 1 ist zudem eine Ladeschaltung 6 für einen Akkumulator 7 angeschlossen. Über einen weiteren Schalter 2a als Entkoppelungselement ist zudem die Last mit dem Akkumulator 7 verbunden.

Wenn die Netzversorgung ausfällt, bezieht die Last 3 ihre Energie über den weiteren Schalter 2a direkt aus dem Akkumulator 7.

Beide bekannten Lösungen benötigen neben einer Standardstromversorgung ein separates USV-Gerät mit eigener Schaltung und Steuerung.

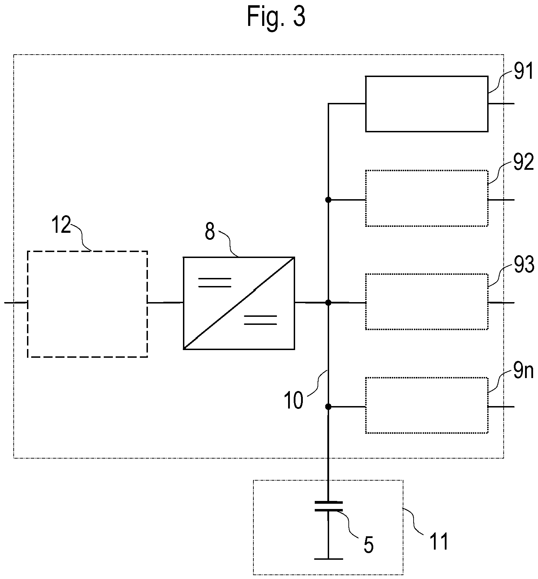

Eine Vereinfachung gemäß der vorliegenden Erfindung ist in Fig. 3 dargestellt. Dabei ist eine Stromversorgung als Schaltnetzteil mit einem DC-DC-Wandler 7 und zumindest einem nachgeschalteten Ausgangsschaltregler 91 ausgebildet. Im vorliegenden Beispiel sind an den Ausgang des DC-DC-Wandlers 8 vier Ausgangsschaltregler 91, 92, 93, 9n angeschaltet. Die Verbindung zwischen DC-DC-Wandler 8 und den Ausgangsschaltreglern 91, 92, 93, 9n bildet den Zwischenkreis 10, an dem eine variable Spannung anliegt. Der DC-DC-Wandler 8 ist beispielsweise als Resonanzwandler mit fixem Übertragungsverhältnis ausgebildet. Dient ein einphasiges Wechselspannungsnetz als Versorgungsnetz, ist dem DC-DC-Wandler 8 günstigerweise eine aktive PFC-Schaltung 12 vorgeschaltet, um Oberwellen im Versorgungsnetz zu minimieren. Eine Derartige Stromversorgung eignet sich insbesondere zur Versorgung mehrerer Lasten mit gleichen oder unterschiedlichen Ausgangsgleichspannungen. Jeder einzelne Ausgangsschaltregler 91, 92, 93, 9n wandelt die variable Zwischenkreisspannung in eine jeweilige Ausgangsgleichspannung um und regelt diese auf den jeweils vorgegebenen Wert. Der Zwischenkreis 10 ist günstigerweise als Kleinspannungszwischenkreis mit einer Spannung zwischen 30 und 60 Volt ausgelegt. Die Ausgangsgleichspannungen liegen bei Einsatz von Abwärtsschaltreglern unter diesem Spannungsniveau (z.B. 24V).

An den Zwischenkreis 10 ist direkt ein Kondensator 5 als Energiespeichermodul 11 angeschlossen. Dabei ist das Energiespeichermodul 11 beispielsweise in einem eigenen Gehäuse angeordnet und über Verbindungskontakte mit dem Zwischenkreis 10 verbindbar.

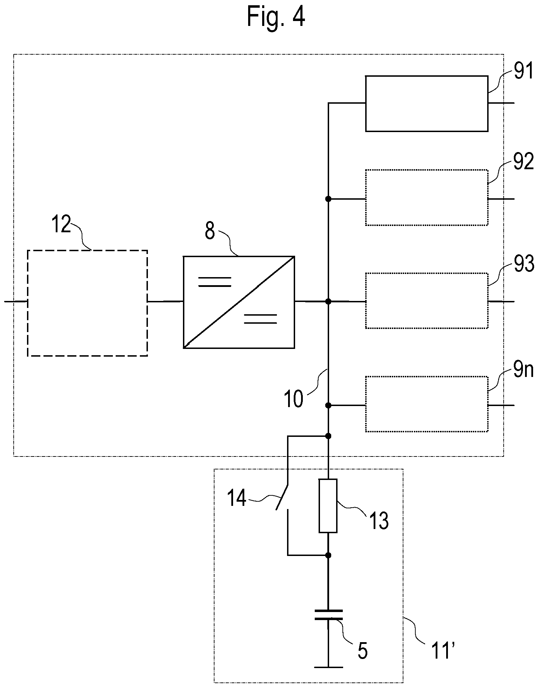

Zum kontrollierten Aufladen des Energiespeichermoduls 11 ist in Fig. 4 zwischen dem Kondensator 5 und dem Zwischenkreis 10 ein Ladewiderstand 13 mit einem parallel geschalteten Schalter 14 vorgesehen. Diese Schaltung verhindert, dass während eines Einschaltvorgangs der Stromversorgung die gesamte Energie am Ausgang des DC-DC-Wandlers 8 zum Aufladen des Kondensators 5 verwendet wird. Stattdessen wird während des Kondensatoraufladens die Zwischenkreisspannung so hoch gehalten, dass die Ausgangsschaltregler 91, 92, 93, 9n bereits eine jeweilige Ausgangsgleichspannung liefern.

Der Widerstand 13 und der Schalter 14 sind entweder gemeinsam mit dem Kondensator 5 in einem modifizierten Energiespeichermodul 11' zusammengefasst oder in einer modifizierten Zwischenkreisschaltung integriert.

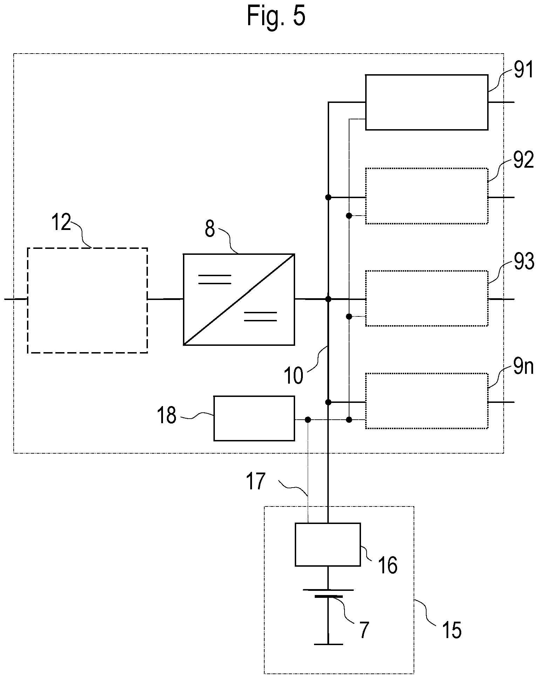

Eine einfache Akkumulatorlösung ist in Fig. 5 dargestellt. Der Zwischenkreis 10 ist über eine Ladeschaltung 16 mit einem Akkumulator 7 verbunden. Die Ladeschaltung 16 umfasst dabei neben einem Laderegler auch einen Ausgangsschaltregler oder zumindest ein Entkoppelungselement zur Abgabe der Akkumulatorenergie an den Zwischenkreis 10. Akkumulator 7 und Ladeschaltung 16 sind beispielsweise in einem gemeinsamen Gehäuse zu einem Energiespeichermodul 15 zusammengefasst und über Verbindungskontakte mit dem Zwischenkreis 10 verbunden. Die Ladeschaltung 16 kann alternativ dazu in einer Zwischenkreisschaltung angeordnet sein.

Einer Steuerung 18 der Stromversorgung ist über eine separate Verbindung 17 ein Ladesignal der Ladeschaltung zugeführt. Die z.B. als Mikrocontroller ausgeführte Steuerung 18 verfügt zu diesem Zweck über eine Serielle Schnittstelle. Der Ladezustand des Akkumulators 7 kann auf diese Weise am Stromversorgungsgerät angezeigt werden oder es erfolgt eine Informationsweitergabe an eine externe Anlagensteuerung mittels geeigneter Geräteschnittstelle.

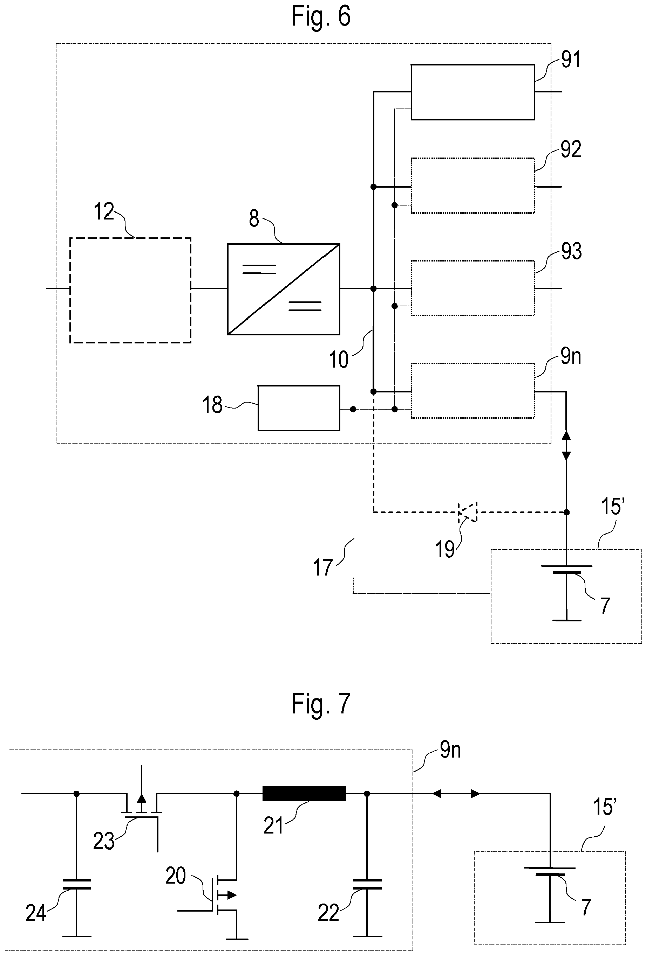

Umfasst die Stromversorgung mehrere Ausgangsschaltregler 91, 92, 93, 9n, wird günstigerweise einer dieser Schaltregler 9n als Ladeschaltung des Akkumulators 7 genutzt, wie in Fig. 6 dargestellt. Des Energiespeichermodul 15' ist hierbei direkt an den Ausgang des Schaltreglers 9n angeschaltet. Zudem besteht eine Verbindung 17 mit der Steuerung 18 zwecks Signalisierung des Ladezustands.

Wenn der Schaltregler 9n nur als Laderegler des Akkumulators 7 verwendet wird, ist der Akkumulator 7 zusätzlich über ein Entkoppelungselement 19 mit dem Zwischenkreis 10 verbunden. Als Entkoppelungselement 19 kommen zum Beispiel eine Diode, ein Transistor oder ein Relaiskontakt in Frage. Bei dieser Verschaltungsvariante ist die Dimensionierung in der Weise wählbar, dass eine Ladung des Akkumulators 7 nur innerhalb eines bestimmten Eingangsspannungsbereichs möglich ist (z.B. 360VAC bis 550VAC). Bei Versorgungsnetzspannungen außerhalb dieses Bereichs (z.B. 320-359VAC) wird keine Ladung durchgeführt. Damit erreicht man einerseits ein günstiges Übersetzungsverhältnis des DC-DC-Wandlers 8. Andererseits wird der DC-DC-Wandler 8 nicht zusätzlich mit einem Ladestrom beaufschlagt, wenn der ohnedies bereits erhöhte Strom infolge einer hohen Ausgangsleistung mit begleitendem Versorgungsspannungseinbruch zu einer thermischen Belastung des DC-DC-Wandlers 8 führt.

Alternativ zu der Rückspeisung mittels Entkoppelungselement 19 ist der als Ladeschaltung ausgebildete Schaltregler 9n bidirektional ausgebildet. Dabei ist anstelle einer masseseitigen Freilaufdiode ein erster Schalter 20 vorgesehen, wie in Fig. 7 dargestellt. Der Schaltregler 9n umfasst eine Drossel 21. Deren erster Anschluss ist mit dem Akkumulator 7 und über einen Kondensator 22 mit einer Masse verbunden. Der zweite Anschluss der Drossel 21 ist über den ersten Schalter 21 mit der Masse verbunden und über einen zweiten Schalter 23 an den Zwischenkreis 10 geschaltet, wobei die Verbindung des zweiten Schalters 23 mit dem Zwischenkreis 10 über einen weiterer Kondensator 24 mit der Masse verbunden ist.

Diese Schaltung eines bidirektionalen Buck/Boost-Schaltreglers 9n fungiert dabei als Ladeschaltung für den Akkumulator 7 und als Rückspeisewandler im Pufferbetrieb bei Netzausfall. Er ist für den gesamten Strom ausgelegt, welcher im Pufferbetrieb zurück in den Zwischenkreis 10 fließt. Dabei besteht die Möglichkeit, im Pufferbetrieb die Ausgangsleistung der Stromversorgung zu reduzieren, um bei aufrechtem Notbetrieb die Überbrückungszeit zu verlängern und die Belastung des Schaltreglers 9n zu reduzieren.

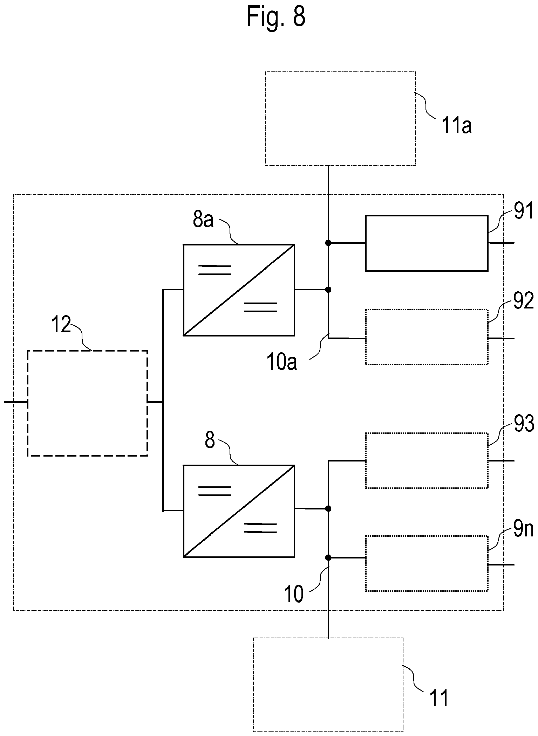

In Fig. 8 ist eine Stromversorgung mit zwei Pfaden dargestellt. Jeder Pfad umfasst einen eigenen DC-DC-Wandler 8 bzw. 8a und einen eigenen Zwischenkreis 10 bzw. 10a. An jeden Zwischenkreis 10, 10a sind Ausgangsschaltregler 91, 92 bzw. 93, 9n und jeweils ein Energiespeichermodul 11 angeschlossen. Im dargestellten Fall umfasst jedes Energiespeichermodul 11 einfacherweise einen Kondensator als Speicherelement. Es sind aber auch alle anderen Ausprägungen eines Energiespeichermoduls 11', 15, 15' vorsehbar.

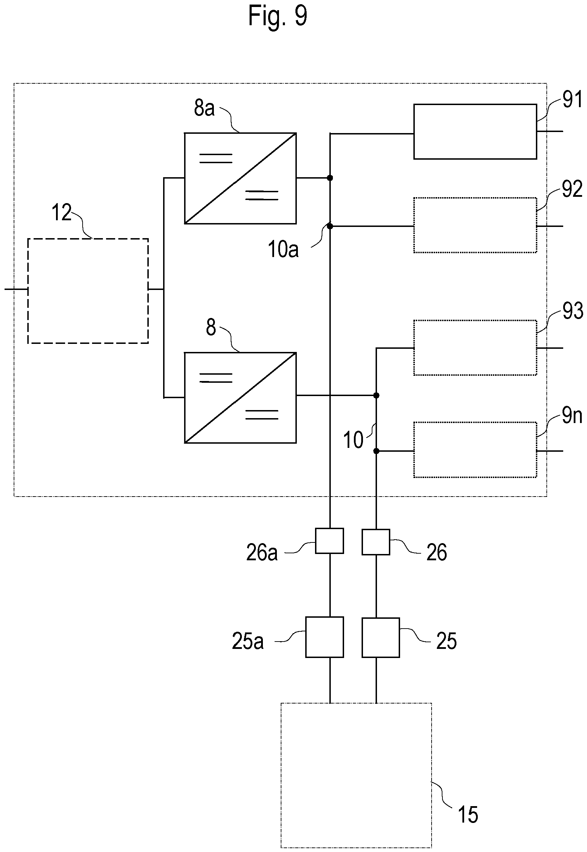

Fig. 9 zeigt ebenfalls eine Stromversorgung mit zwei Pfaden. Beide Zwischenkreise 10, 10a weisen eine gemeinsame Masse auf, wodurch über jeweilige Schalteinheiten 25, 25a ein gemeinsames Energiespeichermodul 15 anschließbar ist. Beispeisweise umfasst dieses einen Akkumulator und eine Ladeschaltung, die Energie aus einem der beiden Zwischenkreise 10, 10a bezieht. Auch alle anderen Ausprägungen eines Energiespeichermoduls 11, 11', 15' sind über entsprechend angesteuerte Schalteinheiten 25, 25a mit beiden Zwischenkreisen 10, 10a verbindbar. In einer Weiterbildung ist in Serie mit jeder Schalteinheit 25, 25a eine Sicherung 26, 26a angeordnet. Diese trennt im Störungsfall einen defekten Pfad von dem Energiespeichermodul 15, wodurch weiterhin ein Pufferbetrieb des zweiten Pfads möglich ist. Die Sicherung 26, 26a ist dabei so ausgelegt, dass sie erst nach einer nicht dargestellten internen Sicherung des defekten Pfads auslöst.

Die Ausführungen zu den Ausprägungen mit zwei Pfaden gelten in analoger Weise für Stromversorgungen mit mehr als zwei Pfaden.

Mit der vorgestellten Erfindung erhält man eine einfach aufgebaute Gerätelösung für eine Stromversorgung mit flexibel variierbarem Energiespeichermodul. Ohne baulichen Zusatzaufwand ist je nach Anwendungsfall ein anderes Energiespeichermodul 11, 11', 15, 15' bzw. ein ergänzendes Energiespeichermodul 11, 11', 15, 15' an den Zwischenkreis 10 anschaltbar. Jedes Energiespeichermodul 11, 11', 15, 15' ist dabei als Kondensatoreinheit oder Akkumulatoreinheit ohne aufwendige USV-Schaltung aufgebaut.

## Patentansprüche

1. Stromversorgung mit zumindest einem Ausgang zur Ausgabe einer Ausgangsgleichspannung und einer Schaltung zur unterbrechungsfreien Stromversorgung, **dadurch gekennzeichnet, dass** ein Zwischenkreis (10) zwischen einem eingangsseitigen DC-DC-Wandler (8) und zumindest einem ausgangsseitigen Ausgangsschaltregler (91, 92, 93, 9n) zur Regelung der zumindest einen Ausgangsgleichspannung angeordnet ist und dass an dem Zwischenkreis (10) ein Energiespeichermodul (11, 11', 15, 15') angeschlossen ist.

2. Stromversorgung nach Anspruch 1, **dadurch gekennzeichnet, dass** der Ausgangsschaltregler (91, 92, 93, 9n) als Abwärtsschaltregler ausgebildet ist.

3. Stromversorgung nach Anspruch 1 oder 2, **dadurch gekennzeichnet, dass** das Energiespeichermodul (11, 11', 15, 15') in einem separaten Gehäuse angeordnet ist und mittels Steckkontakte mit dem Zwischenkreis (10) verbindbar ist.

4. Stromversorgung nach einem der Ansprüche 1 bis 3, **dadurch gekennzeichnet, dass** der DC-DC-Wandler (8) über eine sogenannte aktive Power-Factor-Correction-Schaltung (12) an eine eingangsseitige Versorgungsspannung angeschlossen ist.

5. Stromversorgung nach einem der Ansprüche 1 bis 4, **dadurch gekennzeichnet, dass** das Energiespeichermodul (11, 11') einen Kondensator (5) umfasst.

6. Stromversorgung nach Anspruch 5, **dadurch gekennzeichnet, dass** der Kondensator (5) über einen Ladewiderstand (13) an den Zwischenkreis (10) angeschlossen ist.

7. Stromversorgung nach Anspruch 6, **dadurch gekennzeichnet, dass** parallel zum Ladewiderstand (13) ein Schaltelement (14) angeordnet ist.

8. Stromversorgung nach einem der Ansprüche 1 bis 4, **dadurch gekennzeichnet, dass** das Energiespeichermodul (15, 15') einen Akkumulator (7) umfasst.

9. Stromversorgung nach Anspruch 8, **dadurch gekennzeichnet, dass** der Akkumulator (7) über eine Ladeschaltung (16) an den Zwischenkreis (10) angeschaltet ist.

10. Stromversorgung nach Anspruch 8, **dadurch gekennzeichnet, dass** die Stromversorgung zumindest zwei ausgangsseitige Ausgangsschaltregler (91, 92, 93, 9n) umfasst und dass der Akkumulator (7) über einen Ausgangsschaltregler (9n), welcher als Ladeschaltung ausgeprägt ist, an den Zwischenkreis (10) angeschaltet ist.

11. Stromversorgung nach Anspruch 10, **dadurch gekennzeichnet, dass** der Akkumulator (7) zusätzlich über ein Entkoppelungselement (19) an den Zwischenkreis (10) angeschaltet ist.

12. Stromversorgung nach einem der Ansprüche 9 bis 11, **dadurch gekennzeichnet, dass** die Ladeschaltung (16) bzw. das Energiespeichermodul (15') über eine zusätzliche Verbindung (17) mit einer Steuerung (18) der Stromversorgung verbunden ist, um den Ladezustand des Akkumulators (7) festzustellen.

13. Stromversorgung nach einem der Ansprüche 1 bis 12, **dadurch gekennzeichnet, dass** die Ausgangsschaltregler (91, 92, 93, 9n) eine untere Betriebsspannungsgrenze aufweisen, die unterhalb einer Entladespannung des Energiespeichermoduls (11, 11', 15, 15') liegt.

14. Stromversorgung nach einem der Ansprüche 1 bis 13, **dadurch gekennzeichnet, dass** parallel zum Zwischenkreis (10) ein weiterer Zwischenkreis (10a) vorgesehen ist, welcher über einen weiteren DC-DC-Wandler (8a) gespeist ist.

15. Stromversorgung nach Anspruch 14, **dadurch gekennzeichnet, dass** an jeden Zwischenkreis (10, 10a) ein eigenes Energiespeichermodul (11, 11', 15, 15') angeschlossen ist.

16. Stromversorgung nach Anspruch 14, **dadurch gekennzeichnet, dass** an beide Zwischenkreise (10, 10a) über eine jeweilige Schalteinheit (25, 25a) ein gemeinsames Energiespeichermodul (11, 11', 15, 15') angeschlossen ist.

17. Stromversorgung nach Anspruch 16, **dadurch gekennzeichnet, dass** die jeweilige Schalteinheit (25, 25a) eine Diode umfasst.

18. Stromversorgung nach Anspruch 16 oder 17, **dadurch gekennzeichnet, dass** in Serie zu mindestens einer Schalteinheit (25, 25a) eine Sicherung (26, 26a) vorgesehen ist.

19. Verfahren zum Betreiben einer Stromversorgung nach einem der Ansprüche 1 bis 18, **dadurch gekennzeichnet, dass** das Energiespeichermodul (11, 11', 15, 15') mit Energie aus dem Zwischenkreis (10, 10a) geladen wird und im Bedarfsfall Energie in den Zwischenkreis (10, 10a) entlädt.
